# EUROPEAN PATENT SPECIFICATION

(11) **EP 0 273 772 B1**
(45) Date of publication and mention of the grant of the patent: **29.09.1993**
(21) Application number: 87311522.4
(22) Date of filing: 30.12.1987
(51) Int. Cl.: A23L 1/221, A23L 1/231, A23L 1/234, A23F 5/44

(54) **Tomato seed products and method for their preparation**
Produkte aus Tomatensamen und Verfahren zu deren Herstellung
Produits de graines de tomates et procédé de préparation

(30) Priority: 31.12.1986 US 948029
(43) Date of publication of application: 06.07.1988
(73) Proprietor: Del Monte Corporation, San Francisco California 94119-3575 (US)
(72) Inventor: Nafisi-Movaghar, Karim, Walnut Creek California 94598 (US)
(74) Representative: Crisp, David Norman

(56) References cited:
- US-A- 3 158 485
- FETTE. SEIFEN. ANSTRICHMITTEL, vol. 81, 1979; A.E. EL-TAMINI et al.: "Tomato seed oil I. Fatty acid composition, stability and hydrogenation of the oil", pages 281-284

## Description

This invention relates to improved methods for producing oils, flavorants, and fiber or other additives from vegetable seeds and the like, and particularly to the production of desired flavorants by subjecting tomato seeds to heating, under conditions appropriate to flavor production, for a time and at a temperature sufficient to produce flavorant.

There is considerable demand in the food industry for efficiently produced, low-cost flavorants and flavor enhancers. Various pyrazines and thiazoles are known to provide flavor. For instance, 2,4-dimethyl-5-acetyl-thiazole (also known as 2,4-dimethyl-5-thiazoyl methyl ketone) is a known synthetic flavorant which is believed to impart a nutty or meaty flavor when added to appropriate foodstuffs in appropriate concentrations. Likewise, 3-ethyl-2,5-dimethyl pyrazine is a known synthetic flavorant which is believed to impart a burnt almond flavor in sugar syrup, a woody flavor in instant coffee, and a chocolaty sweet flavor by itself. Such synthetic flavorants may be expensive to produce. Because of this expense, it is desirable to have a natural source of flavorant utilizing a natural starting material which may be inexpensively derived and which may be employed in a costeffective procedure. Moreover, it is desirable to produce flavorant by a process which does not involve the addition of reactants which are unacceptable for human consumption. Such reactants may necessitate costly or inefficient procedural safeguards for maintaining product safety.

Fette, Seifen, Anstrichmittel, vol.81, p.281-284 (1979) discloses the extraction of tomato seed oil. However, this citation does not discuss supplementing flavour in a food product.

We have now found it possible:
to provide a means for the efficient and cost-effective production of flavorants;
to provide a flavorant-producing process which utilizes natural starting materials and does not involve addition of reactants which are unacceptable for human consumption;
to provide a process for converting the by-products of whole tomato processing into economically useful products;
to prepare flavorants and/or flavored oils from tomato seeds; and
to provide food products, such as coffee, having improved organoleptic properties and/or more economical production.

In accordance with the instant invention, flavorants are provided by heating tomato seeds, for a time and at a temperature effective to cause development of flavorants capable of altering the organoleptic properties of a food product into which said flavorants are incorporated.

Thus according to one aspect of the present invention there is provided a process for supplementing the flavor in a food product which comprises incorporating into a food product flavorants derived from tomato seeds which have been roasted at a temperature of at least 225°F (107°C) for a period of at least 3 minutes.

In accordance with another aspect of the present invention there is provided a process for supplementing a food product comprising the steps of isolating tomato seeds; drying said seeds; subjecting said seeds to heat in excess of 225°F (107°C) for a time period in excess of 3 minutes; grinding said seeds; and then incorporating into a food product an amount of said ground seeds effective to alter the organoleptically perceptible flavor of said food product.

If a liquid flavorant is desired, flavored oils may be isolated from the seeds by known methods such as pressing, extraction or both. In this instance, the seeds need not be ground, but may be if desired.

Tomato seeds, tomato skin, and the like may result as by-products of processing operations well known in the art for preparing tomato products from whole tomatoes. The economic efficiency of processes for the treatment of whole tomatoes may be increased by efficient utilization of these by-products as starting materials for the production of useful products such a flavorants, oils, and/or bulk.

Without intending to be bound by theory, it is believed that when components of tomato seeds are subjected to heat, said components undergo reactions capable of producing flavorants and/or precursors to flavorants. The interaction of certain proteins and certain carbohydrates may produce flavorants and precursors. The presence of fats may enhance the reaction but fats are not believed essential. It is believed that by adjusting the roasting temperature and/or time period in which seeds are subjected to roasting, the identity and concentration of the produced flavorants may be altered. For instance, it is believed that in certain short heating time processes, some flavorant precursors will have little opportunity to react and produce flavorants. Hence, flavorants which are produced early in the roasting process will predominate at this stage. Conversely, in a longer heating process, precursors will have more opportunity to undergo reactions leading to their products and early-produced flavorants may be broken down into other flavorants or even into unflavored components.

Finally, it is believed that temperature of heating will substantially affect the concentration and identity of flavorants which are derived. Reactions producing certain flavorants may not proceed at all at low heating temperatures. Conversely, some flavorants or precursors which are produced at low heating temperatures may be broken down into other flavorants or even into unflavored components at higher heating temperatures. A higher concentration of flavorants is expected at high temperatures.

The invention will be further illucidated by the following detailed description of certain preferred embodiments.

Tomato seeds may be isolated in a number of conventional processes well known in the art. Mixtures of seed and skin are often by-products of whole tomato processing. Seed and skin may be separated from each other by known methods such as by water floatation wherein tomato seed falls to the bottom of a separation vessel leaving tomato skin floating near the water surface. Seeds may then be isolated and dried, or may be directly used for production of oils, fats and flavorants as described herein.

Tomato seeds are believed to be high in carbohydrates and protein, containing nearly all of the essential amino acids. They are also believed to contain a high amount of oil, nearly two thirds of which is believed to be unsaturated fatty acids. Tomato seeds are also believed to contain crude fiber and are rich in minerals such as calcium, magnesium, potassium and some zinc. The oil, being high in unsaturated fatty acids, is a good source of salad oil or even cooking oil.

In certain preferred embodiments of the invention, tomato seeds are dried, and heated at temperatures and for time periods which vary depending on the particular flavor to be produced. For instance, when tomato seeds are heated at temperatures exceeding 225°F (107°C) in accordance with the present invention, the seeds begin to acquire new flavor characteristics over time. As reaction conditions become more vigorous, i.e. higher temperatures and/or longer time periods of heat exposure, the flavor characteristics imparted to the seeds change progressively from a meaty flavor to a nutty flavor to a cocoa-like flavor to a coffee-like flavor. Reaction conditions may thus be varied to produce a variety of flavors, flavor combinations and flavor concentrations. If coffee-like flavor is desired, the seeds should preferably be heated at a temperature of at least 425°F (218°C) for a time period of at least 9 minutes. For example, heating temperature may be 425°F (218°C) to 450°F (232°C) and heating time may be 9 to 10 minutes. Drying the seeds prior to heating is desirable because water is believed to slow and/or inhibit some flavor-forming reactions and to undesirably cool seeds during heating. Notwithstanding this, drying is not required, and in any event, may be accomplished simultaneously with heating if desired. It also is preferred to adjust relative humidity during the roasting process to a level less than 6%.

After heating, the flavor may be recovered by grinding the tomato seeds into a powdered flavorant or by extracting flavored oil from the seeds. When seeds are ground, the resulting flavorant appears in the form of a powder which is substantially dry notwithstanding the high oil content of the seeds. This dryness is believed to be possible due to the effects of the high fiber content of the seeds wherein the fiber acts as a dispersing agent to keep the oil well dispersed.

Alternatively, after roasting, flavored oils maybe isolated from the seeds by known methods such as pressing the seeds and collecting displaced oil and/or by extraction of oil. Extraction may be accomplished, with or without a prior pressing step, by immersing seeds in an extraction solvent, preferably at a temperature near the boiling point of the solvent at atmospheric pressure for a time period sufficient to extract oils, fats and flavorants produced in the roasting process.

While extraction is preferably performed at or near the boiling point of the solvent, it is not necessary to heat the solvent at all. If desired, a solvent may be heated beyond its boiling point so long as sufficient pressure is applied to keep the solvent in the liquid phase. In order to avoid flavor changes during extraction, it is desirable but not necessary to keep the temperature below 210°F (99°C) and preferably in a range between 130°F (54°C) and 200°F (93°C). Selection of solvent can affect the efficiency of the process as high boiling solvents require high energy expenditure for solvent removal after extraction and low boiling solvents raise volatility problems. Useful extraction solvents include organic solvents preferably non-polar hydrocarbons such as non-polar ethers and ketones. Preferably, the extraction solvents are nontoxic even though the solvents may be are removed prior to use of extracted components in food products. Other exemplary extraction solvents include diethylether, trichloro ethylene, acetone, 6-carbon hydrocarbons boiling between 146°F (63°C) and 156°F (69°C), and 7-carbon hydrocarbons boiling between 194°F (90°C) and 210°F (99°C). Extracted oils and flavorants may be separated from the extraction solvent by any of a number of known techniques such as distillation or settling wherein the extracted components migrate to the top while the solvent is removed underneath or vice versa.

The isolated flavorant may then be collected for use in enhancing organoleptic properties of food products into which it may later be introduced. Preferred food products include meaty products, chocolate products, cocoa products, nutty products and coffee products. As used herein specified food products include those which comprise the specified food or a similar flavor in whole or in part. For example, the term "coffee products" includes coffee itself, products comprising coffee and products comprising coffee flavor.

The invention is further illustrated by the following examples.

### Example 1

A mixture of seeds and skins was obtained as the byproduct of whole tomato processing. Seeds were separated from the skin by water floatation wherein seeds sunk to the bottom and skin floated. The seeds were collected, washed and dried. The seeds were then roasted at a temperature of 225-250°F (107-121°C) for a period of about 30 minutes, after which the seeds were observed to have a green-brown color and to have the aroma of roasted nuts.

### Examples 2-4

Tomato seeds were collected and dried as in example 1 and were roasted in the manner set forth in the chart below to yield a roasted product with the characteristics indicated.

| | Example 2 | Example 3 | Example 4 |
|---|---|---|---|
| Roasting Temperature (°F) | 350-365 | 425-450 | 425-450 |
| (°C) | 177-185 | 218-232 | 218-232 |
| Roasting Time (Min.) | 10-12 | 6-7 | 9-10 |
| Weight Loss % During Roasting | 8 | 8.25 | 9.4 |
| Color | green brown | brown | dark brown |
| Aroma | roasted nuts | strong nutty/coffee aroma (dominated by nutty character) | coffee/nutty, (dominated by coffee character) |

### Example 5

Roasted tomato seeds are prepared, dried and roasted as in example 1, and the roasted seeds are mixed with acetone in a weight ratio of 1:2 to 1:3 with thorough mixing. The acetone is heated at a temperature between 130°F (54°C) and 133°F (56°C) and percolated through the seeds for a time period of about 5 hours. The mixture is then filtered, the mother liquor is collected, and the acetone is removed to provide a flavored oil having amber color and the aroma of roasted nuts.

### Example 6

Tomato seeds were collected and dried as in example 1 and were then roasted at a temperature of about 450°F (232°C) for a time period of between 11 minutes and 12 minutes. The resulting tomato seeds were then ground into a dark powder having a coffee-like aroma and taste. The powder was then mixed into coffee in a ratio of about 1:4 (powder to coffee) resulting in an economically fortified coffee product.

### Example 7

Tomato seeds were collected and dried as in example 1, and were then roasted at a temperature of 420°F (216°C) for about 6 minutes. The seeds were then ground and used to replace 25% of the unsweetened chocolate used in a cookie dough. Two doughs were prepared, a control batch using cholcolate without tomato seed fortification and a test dough wherein 25% of the chocolate has been replaced by the ground tomato seeds. The ingredients and weight percentages of ingredients in each dough were as set forth below:

| | Control % | Test% |
|---|---|---|
| 1. Sugar | 34.01 | 34.01 |
| 2. Vegetable oil | 7.55 | 7.55 |
| 3. Unsweetened chocolate | 9.24 | 6.93 |
| 4. Vanilla | 0.35 | 0.35 |
| 5. Eggs | 18.41 | 18.41 |
| 6. Flour | 24.45 | 24.45 |
| 7. Baking powder | 0.54 | 0.54 |
| 8. Salt | 0.27 | 0.27 |
| 9. Powdered sugar | 5.18 | 5.18 |
| 10. Roasted Tomato Seeds | -- | 2.31 |

Items 1 through 5 and the roasted tomato seeds were mixed. Then the other ingredients were stirred in. The resulting mixtures were refrigerated for three hours. The doughs were shaped into numerous small balls, rolled in powdered sugar, placed on a greased sheet and baked for 10-12 minutes at 350°F (177°C). No significant flavor or texture difference was observed between the control and test cookies.

## Claims

1. A process for supplementing the flavor in a food product which comprises incorporating into a food product flavorants derived from tomato seeds which have been roasted at a temperature of at least 225°F (107°C) for a period of at least 3 minutes.

2. A process for supplementing a food product comprising the steps of isolating tomato seeds; drying said seeds; subjecting said seeds to heat in excess of 225°F (107°C) for a time period in excess of 3 minutes; grinding said seeds; and then incorporating into a food product an amount of said ground seeds effective to alter the organoleptically perceptible flavor of said food product.

3. A process according to claim 1 or claim 2 wherein said food product is selected from coffee products, chocolate products, cocoa products, nutty products, and meaty products.

4. A process according to claim 3 wherein said food product is a coffee product, said seeds are heated at a temperature above 425°F (218°C) for a time period of above 9 minutes.

5. A process according to claim 4 wherein said coffee product comprises natural ground coffee suitable for percolating and wherein the weight ratio of ground tomato seeds to natural ground coffee is 1:3 to 1:5.

## Patentansprüche

1. Verfahren zur Ergänzung des Geschmackes in einem Nahrungsmittelprodukt, indem man in ein Nahrungsmittelprodukt Geschmacksstoffe einarbeitet, die von Tomatensamen herrühren, welche bei einer Temperatur von wenigstens 225°F (107°C) während einer Zeitdauer von wenigstens 3 Minuten geröstet wurden.

2. Verfahren zur Ergänzung eines Nahrungsmittelproduktes mit den Stufen, in denen man Tomatensamen isoliert, diese Samen trocknet, die Samen Wärme oberhalb 225°F (107°C) während einer Zeitdauer von mehr als 3 Minuten aussetzt, die Samen vermahlt und dann in ein Nahrungsmittelprodukt eine Menge dieser gemahlenen Samen einarbeitet, welche wirksam ist, den organoleptisch wahrnehmbaren Geschmack des Nahrungsmittelproduktes zu verändern.

3. Verfahren nach Anspruch 1 oder Anspruch 2, bei dem das Nahrungsmittelprodukt unter Kaffeeprodukten, Schokoladeprodukten, Kakaoprodukten, Nußprodukten und Fleischprodukten ausgewählt wird.

4. Verfahren nach Anspruch 3, bei dem das Nahrungsmittelprodukt ein Kaffeeprodukt ist und die Samen auf eine Temperatur oberhalb 425°F (218°C) während einer Zeitdauer von mehr als 9 Minuten erhitzt werden.

5. Verfahren nach Anspruch 4, bei dem das Kaffeeprodukt natürlichen gemahlenen Kaffee zum Filtern umfaßt und das Gewichtsverhältnis von gemahlenen Tomatensamen zu natürlichem gemahlenem Kaffee 1: 3 bis 1 : 5 beträgt.

## Revendications

1. Procédé pour rehausser le goût d' un produit alimentaire, comprenant l'introduction, dans un produit alimentaire, d'arômes provenant de graines de tomates qui ont été grillées à une température d'au moins 225°F (107°C) pendant une durée d'au moins 3 minutes.

2. Procédé pour rehausser le goût d'un produit alimentaire, comprenant les étapes consistant à isoler les graines de tomates, sécher lesdites graines, soumettre lesdites graines à une chaleur supérieure à 225°F (107°C), pendant une durée de plus de 3 minutes, broyer lesdites graines, et ensuite, incorporer une quantité efficace desdites graines broyées dans un produit alimentaire pour modifier le goût dudit produit alimentaire, de manière perceptible du point de vue organoleptique.

3. Procédé selon la revendication 1 ou 2, dans lequel ledit produit alimentaire est choisi parmi des produits à base de café, des produits à base de chocolat, des produits à base de cacao, des produits à base de noisettes et des produits à base de viande.

4. Procédé selon la revendication 3, dans lequel ledit produit alimentaire est un produit à base de café, et lesdites graines sont chauffées à une température supérieure à 425°F (218°C) pendant un laps de temps de plus de 9 minutes.

5. Procédé selon la revendication 4, dans lequel ledit produit à base de café comprend du café moulu naturel convenant pour la percolation, et dans lequel le rapport pondéral des graines de tomates broyées au café moulu naturel est de 1:3 à 1:5.
